# EUROPEAN PATENT APPLICATION

(11) **EP 1 767 754 A1**
(43) Date of publication of application: **28.03.2007**
(21) Application number: 05751521.5
(22) Date of filing: 16.06.2005
(51) Int. Cl.: F01N 3/08, B01D 53/94, F01N 3/20, F01N 3/28, F02D 41/22, F02D 45/00

(54) **EXHAUST GAS PURIFICATION APPARATUS**

(30) Priority: 17.06.2004 JP 2004179734
(71) Applicant: Hino Motors, Ltd., Hino-shi, Tokyo 191-8660 (JP)
(72) Inventor: HOSOYA, Mitsuru, Hino-shi, Tokyo 1918660 (JP); SHIMODA, Masatoshi, Hino-shi, Tokyo 1918660 (JP)
(74) Representative: Köhler, Walter
(86) International application number: PCT/JP2005/011022
(87) International publication number: WO 2005/124116

(57) **Abstract**

Increase of NOₓ emission is minimized even under a condition that NOₓ depuration system has malfunction.

An exhaust emission control device is disclosed which has selective reduction catalyst 10 incorporated in an exhaust pipe 9, urea water 17 (reducing agent) being added to exhaust gas upstream of the selective reduction catalyst 10 by urea water adding means 18 (reducing agent adding means) so as to depurate NOₓ through reduction. The exhaust emission control device has NOₓ sensors 24 and 25 respectively arranged on entry and exit sides of the selective reduction catalyst 10 for detecting NOₓ concentrations, and an NOx depuration control device 23 (control device) which judges abnormality, on the basis of detection signals 24a and 25a from the NOₓ sensors 24 and 25, by non-attainment of a predetermined Noₓ reduction ratio and, when such abnormality is judged, restriction of an amount of fuel to be injected is commanded.

## Description

### Technical Field

The present invention relates to an exhaust emission control device wherein NOₓ in exhaust gas is depurated through reduction.

### Background Art

Conventionally, some diesel engines have been provided with selective reduction catalyst incorporated in an exhaust pipe through which exhaust gas flows, said catalyst having a characteristic of selectively reacting NOₓ with a reducing agent even in the presence of oxygen. A required amount of reducing agent is added upstream of the selective reduction catalyst to reduce NOₓ (nitrogen oxides) in the exhaust gas with the reducing agent on the catalyst to thereby reduce a concentration of discharged NOₓ.

In a field of industrial plant or the like with flue-gas denitration, it has been well known that ammonia (NH₃) is effectively used as reducing agent to depurate NOₓ through reduction. However, for automobiles, safety in carrying ammonia itself during running is difficult to ensure, so that in recent years, use of nontoxic urea water as reducing agent has been researched (see, for example, Reference 1).
[Reference 1] JP 2002-161732A

More specifically, when urea water is added to the exhaust gas upstream of the selective reduction catalyst, the urea water is decomposed into ammonia and carbon dioxide gas with the temperature condition of about 170-180°C or more to thereby depurate well NOₓ in the exhaust gas through reduction by ammonia on the catalyst.

### Summary of the Invention

### Problems to be Solved by the Invention

However, in this kind of selective reduction catalyst, there may be a fear that urea water is left unreplenished or that urea water is not replenished in an appropriate concentration. In such a case, there may be a fear that, even if appropriate addition of urea water is commanded by a control system, system malfunction of not attaining targeted Noₓ reduction ratio may occur, resulting in increase of NOₓ emission before such system malfunction is resolved.

The invention was made in view of the above and has its object to minimize the increase of NOₓ emission even if the NOₓ depuration system has malfunction.

### Means or Measures for Solving the Problems

The invention is directed to an exhaust emission control device wherein selective reduction catalyst is incorporated in an exhaust pipe, a reducing agent being added upstream of said catalyst by reducing-agent adding means to depurate NOₓ through reduction, comprising NOₓ sensors arranged respectively on entry and exit sides of the selective reduction catalyst for detecting NOₓ concentrations, and a control device for judging abnormality on the basis of detection signals from both of the NOₓ sensors by non-attainment of a predetermined NOₓ reduction ratio and for commanding restriction of an amount of fuel to be injected when said abnormality is judged.

More specifically, Noₓ concentrations on the entry and exit sides of the selective reduction catalyst are monitored by the control device on the basis of the detection signals from both of the NOₓ sensors, and abnormality of not attaining the predetermined NOₓ reduction ratio is judged when no remarkable difference is ascertained between the NOₓ concentrations on the entry and exit sides of the selective reduction catalyst; when such abnormality is judged, the amount of fuel to be injected is restricted by the command from the control device, so that an amount of NOₓ to be generated in the engine is reduced to suppress the increase of NOₓ emission.

When the invention is worked out more specifically, the reducing agent may be urea water and the selective reduction catalyst may have a characteristic of capable of selectively reacting NOₓ with ammonia even in the presence of oxygen.

### Effects of the Invention

According to an exhaust emission control device of the invention as mentioned above, an excellent effect or advantage is obtained: even when an NOₓ depuration system has malfunction, the amount of fuel to be injected can be restricted to reduce an amount of NOₓ to be generated in the engine, whereby increase of NOx emission can be minimized.

### Brief Description of the Drawings

[Fig. 1] A schematic view showing an embodiment of the invention.
[Fig. 2] A perspective view showing partly in cutout the selective reduction catalyst of Fig. 1.
[Fig. 3] A flow chart showing control steps of the NOₓ depuration control device shown in Fig. 1.

### Explanation of the Reference Numerals

- 1: engine
- 7: exhaust gas
- 9: exhaust pipe
- 10: selective reduction catalyst
- 17: urea water (reducing agent)
- 18: urea water adding means (reducing-agent adding means)
- 21: electronic control unit
- 21a: control signal
- 22: fuel injection device
- 23: NOₓ depuration control device (control device)
- 24: NOₓ sensor
- 24a: detection signal
- 25: NOₓ sensor
- 25a: detection signal

### Best Mode for Carrying Out the Invention

Next, an embodiment of the invention will be described in conjunction with the drawings.

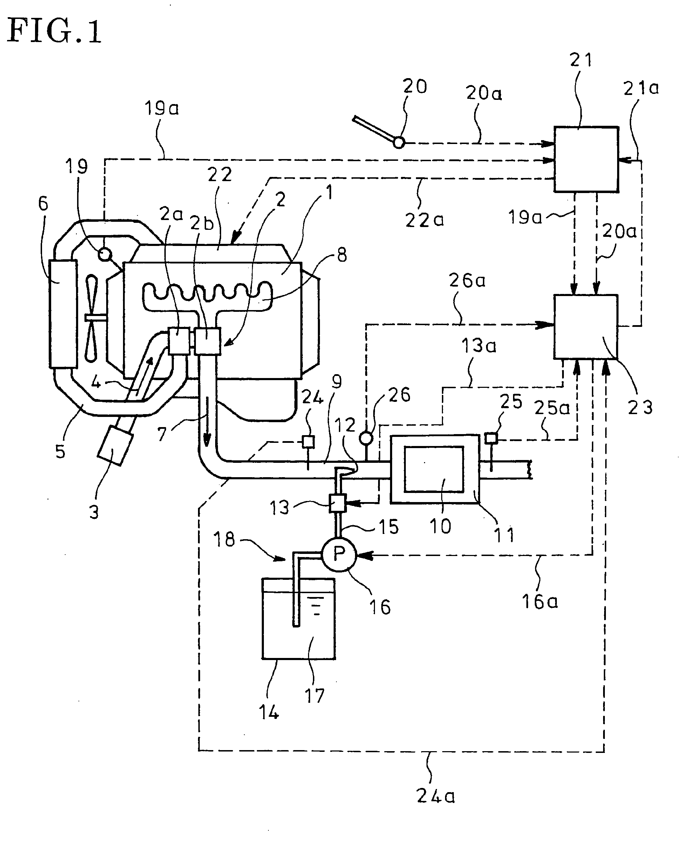

Figs. 1-3 shows the embodiment of the invention. In Fig. 1, reference numeral 1 denotes diesel engine. The engine 1 shown has a turbocharger 2 with a compressor 2a to which air 4 from an air cleaner 3 is fed via an intake pipe 5. The air 4 thus pressurized in the compressor 2a is fed further through the intake pipe to an intercooler 6 for cooling. The cooled air 4 from the intercooler 6 is fed to an intake manifold (not shown) where the air 4 is introduced to each cylinder of the engine 1.

The exhaust gas 7 discharged from each cylinder of the engine 1 is fed via an exhaust manifold 8 to a turbine 2b of the turbocharger 2, the exhaust gas 7 after having driven the turbine 2b being discharged outside via an exhaust pipe 9.

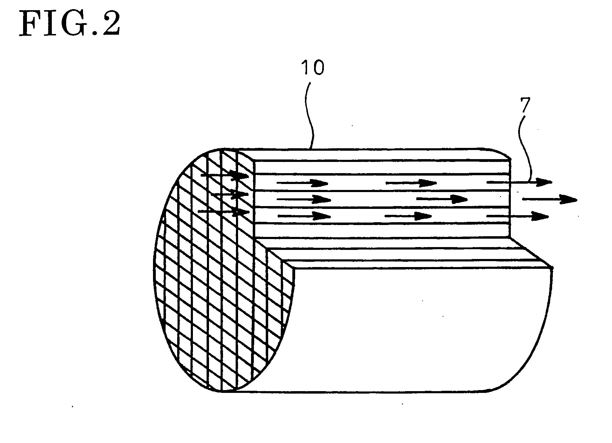

Selective reduction catalyst 10 encased in a casing 11 is incorporated in the exhaust pipe 9 through which exhaust gas 7 flows. The selective reduction catalyst 10 is formed as flow-through type honeycomb structure as shown in Fig. 2, and has a characteristic of capable of selectively reacting NOₓ with ammonia even in the presence of oxygen.

Further, arranged upstream of the casing 11 is an urea-water injection valve 13 with an injection nozzle 12, the injection valve 13 being connected to an urea water tank 14 arranged at an appropriate site via an urea-water supply line 15, so that the urea water (reducing agent) 17 in the tank 14 can be added upstream of the selective reduction catalyst 10 via the injection valve 13 by driving a supply pump 16 incorporated in the supply line 15. Thus, urea-water adding means (reducing-agent adding means) 18 is constituted by the urea-water injection valve 13, urea water tank 14, urea-water supply line 15 and supply pump 16.

The engine 1 is provided with a revolution sensor 19 for detecting revolution of the engine. A revolution signal 19a from the revolution sensor 19 and a load signal 20a from an accelerator sensor 20 (sensor for detecting treadled angle of an accelerator pedal) are inputted into an engine control unit or electric control unit 21 (ECU).

In the ECU 21, a fuel injection signal 22a for commanding fuel injection timing and amount to be injected is outputted to a fuel injection device 22 for injecting fuel to each cylinder of the engine 1, so that appropriate fuel injection control is carried out on the basis of current operation status judged from the above-mentioned revolution and load signals 19a and 20a from the sensors 19 and 20.

More specifically, the fuel injection device 22 comprises a plurality of injectors (not shown) each for each cylinder, an electromagnetic valve in each of the injectors being controlled in its opening by the fuel injection signal 22a so as to appropriately control the fuel injection timing and amount to be injected.

An NOₓ depuration control device 23 (control device) arranged separately from the ECU 21 outputs a valve-opening command signal 13a to the urea-water injection valve 13, and further outputs a drive command signal 16a to the supply pump 16. Thus, by valve-opening actuation of the injection valve 13, the amount of the urea water 17 to be added is appropriately controlled and, upon such addition of the urea water any required injection pressure is obtained by driving the supply pump 16.

The NOₓ depuration control device 23 receives from the ECU 21 the revolution and load signals 19a and 20a from the sensors 19 and 20 and, on the basis of current operation status judged from these signals, NOₓ generation amount is estimated; an amount of urea water 17 to be added commensurate with the estimated NOₓ generation amount is calculated and addition of such required amount of urea water 17 is carried out.

Inputted to the NOₓ depuration control device 23 are detection signals 24a and 25a from NOₓ sensors 24 and 25 arranged respectively on the entry and exit sides of the selective reduction catalyst 10 for detecting NOₓ concentrations as well as a detection signal 26a from a temperature sensor 26 arranged on the entry side of the catalyst 10; on the basis of these detection signals 24a, 25a and 26a, abnormality where a predetermined temperature or more is attained and a predetermined Noₓ reduction ratio is not attained is judged and, when such abnormality is judged, the control device outputs a control signal 21a to the ECU 21 so as to command restriction of an amount of fuel to be injected.

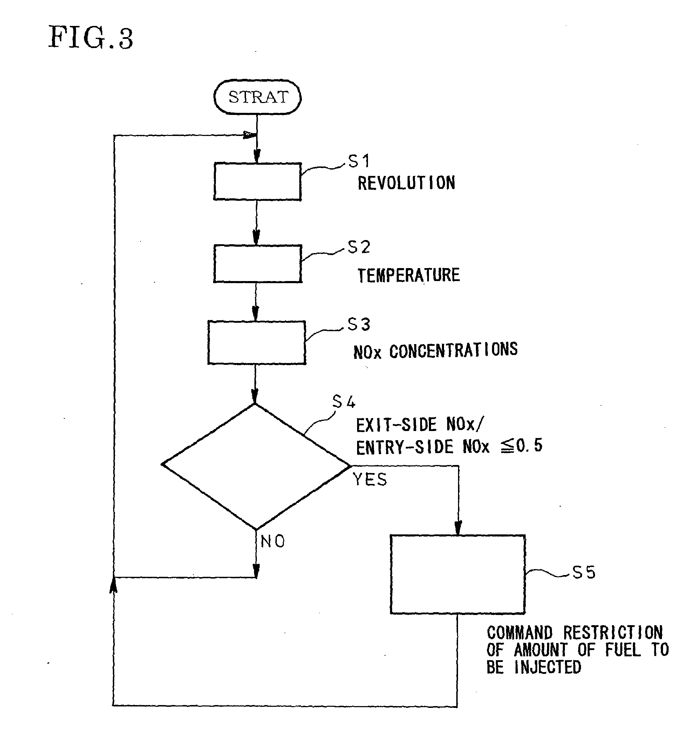

More specifically, as shown in Fig. 3 which shows specific control sequence in the NOₓ depuration control device 23, the revolution signal 19a from the revolution sensor 19 is ascertained in step S1; the detection signal 26a from the temperature sensor 26 is ascertained in step S2; and the detections signals 24a and 25a from both of the NOₓ sensors 24 and 25, respectively, are ascetained in step S3. Under the operation status that 50% or more of Noₓ reduction ratio is surely obtained provided that the NOₓ depuration system has no malfunction, whether the procedure advances to step S4 where whether the ratio of the exit-side NOₓ concentration to the entry-side NOₓ concentration is less than 0.5 or not is judged; if affirmative or "YES", the procedure proceeds to step S5 where restriction of an amount of fuel to be injected is commanded as control signal 21a to the ECU 21; and if negative or "NO", the procedure returns to step S1 and the same control sequence is repeated.

In this respect, ascertainment of temperature at step S2 may not always be carried out by actual measurement through the temperature sensor 26 arranged on the entry side of the selective reduction catalyst 10. For example, the exhaust temperature may be estimated from the operation status on the basis of the sensed engine revolution and load.

When the ECU 21 receives the control signal 21a from the NOₓ depuration control device 23, it selects a map for fuel injection control with the fuel injection amount being reduced than normal, so that on the basis of this map, a reduced amount of fuel to be injected than usaul is outputted as fuel injection signal 22a to the fuel injection device 22.

In this case, restriction of the fuel injection amount lower than usual must be accompanied by changes of injection timing and pressure to appropriate values (corresponding to the change of the fuel injection amount). Therefore, these are also adapted to be changed accordingly.

With the exhaust emission control device thus constructed, NOₓ concentrations on the entry and exit sides of the selective reduction catalyst 10 are monitored by NOₓ depuration control device 23 on the basis of the detection signals 24a and 25a from both of the NOₓ sensors 24 and 25: when no remarkable difference between those on the entry and exit sides of the selective reduction catalyst 10 is ascertained, abnormality as non-attainment of a predetermined NOₓ reduction ratio is judged, and when such abnormality is judged, the control signal 21a is outputted from the NOₓ depuration control device 23 to the ECU 21 so as to restrict the amount of fuel to be injected; as a result, an amount of NOₓ to be generated in the engine 1 is reduced to suppress the increase of NOₓ emission.

Thus, according to the above-mentioned embodiment, even if the NOₓ depuration system has malfunction, an amount of fuel to be injected can be restricted to reduce an amount of NOₓ to be generated in the engine 1 to thereby minimize increase of NOₓ emission.

It is to be understood that an exhaust emission control device of the invention is not limited to the above-mentioned embodiment and that various changes and modifications may be effected without leaving the gist of the invention. For example, the reducing agent added to the selective reduction catalyst may be diesel oil or the like other than the urea water.

## Claims

1. An exhaust emission control device wherein selective reduction catalyst (10) is incorporated in an exhaust pipe (9), a reducing agent (17) being added upstream of said catalyst (10) by reducing-agent adding means (18) to depurate NOₓ through reduction, comprising NOₓ sensors (24,25) arranged respectively on entry and exit sides of the selective reduction catalyst (10) for detecting NOₓ concentrations, and a control device for judging abnormality on the basis of detection signals (24a,25a) from both of the NOₓ sensors (24,25) by non-attainment of a predetermined NOₓ reduction ratio and for commanding restriction of an amount of fuel to be injected when said abnormality is judged.

2. An exhaust emission control device as claimed in claim 1, wherein the reducing agent (17) is urea water, the selective reduction catalyst (10) having a characteristic of capable of selectively reacting NOₓ with ammonia even in the presence of oxygen.
